# FASCICULE DE BREVET EUROPEEN

(11) **EP 3 674 897 B1**
(45) Date de publication et mention de la délivrance du brevet: **20.05.2026**
(21) Numéro de dépôt: 19220137.4
(22) Date de dépôt: 30.12.2019
(51) Int. Cl.: G06F 9/50, G06Q 10/06

(54) **PROCÉDÉ ET DISPOSITIF D'AIDE À LA DÉCISION POUR L'ALLOCATION DE MOYENS DE CALCUL SUR UNE INFRASTRUCTURE DE CALCULS HAUTES PERFORMANCES**
ENTSCHEIDUNGSUNTERSTÜTZUNGSVERFAHREN UND VORRICHTUNG ZUR ZUORDNUNG VON RECHNUNGSMITTELN ZU EINER HOCHLEISTUNGS-RECHNUNGSINFRASTRUKTUR
DECISION SUPPORT METHOD AND DEVICE FOR ALLOCATING COMPUTATION MEANS ON A HIGH PERFORMANCE COMPUTING INFRASTRUCTURE

(30) Priorité: 31.12.2018 FR 1874427
(43) Date de publication de la demande: 01.07.2020
(73) Titulaire: Bull SAS, 78340 Les Clayes-sous-Bois (FR)
(72) Inventeur: CALEGARI, Patrice, 78340 LES CLAYES-SOUS-BOIS (FR); LACOUR, Sébastien, 78340 LES CLAYES-SOUS-BOIS (FR); LEVRIER, Marc, 78340 LES CLAYES-SOUS-BOIS (FR)
(74) Mandataire: Cabinet Camus Lebkiri

(56) Documents cités:
- US-A1- 2016 128 083
- JENNIFER M SCHOPF: "A General Architecture for Scheduling on the Grid", 31 January 2002 (2002-01-31), XP055611741, Retrieved from the Internet <URL:http://citeseerx.ist.psu.edu/viewdoc/download?doi=10.1.1.103.804&rep=rep1&type=pdf> [retrieved on 20190808]
- HOVESTADT M ET AL: "Scheduling in HPC resource management systems: queuing vs. planning", ELECTRONIC PUBLISHING, ARTISTIC IMAGING, AND DIGITAL TYPOGRAPHY; [LECTURE NOTES IN COMPUTER SCIENCE , ISSN 0302-9743], SPRINGER VERLAG, DE, vol. 2862, 24 June 2003 (2003-06-24), pages 1 - 19, XP002447325, ISBN: 978-3-540-24128-7, DOI: 10.1007/10968987_1
- THAIN DOUGLAS ET AL: "Grid Computing: Making the Global Infrastructure a Reality", 1 January 2003 (2003-01-01), XP055611750, ISBN: 978-0-470-85319-1, Retrieved from the Internet <URL:https://onlinelibrary.wiley.com/doi/pdf/10.1002/0470867167#page=335> [retrieved on 20190808]
- MARVIN SOLOMON: "The ClassAd Language Reference Manual Version 2.4", 31 May 2004 (2004-05-31), XP055611761, Retrieved from the Internet <URL:https://research.cs.wisc.edu/htcondor/classad/refman.pdf> [retrieved on 20190808]

## Description

L'invention concerne le domaine du calcul à haute performance, et plus particulièrement l'allocation de moyens de calcul, pouvant être utilisés dans des applications diverses telles que l'aéronautique, l'énergie, la climatologie et les sciences de la vie. L'invention concerne un procédé d'aide à l'allocation de moyen de calcul, un produit programme d'ordinateur apte à mettre en oeuvre ledit procédé, un dispositif d'aide à l'allocation de moyens de calcul et un système de calcul à haute performance intégrant un tel dispositif.

### [Art antérieur]

Le calcul haute performance, aussi appelé HPC (« High Performance Computing » en terminologie anglo-saxonne) se développe pour la recherche universitaire comme pour l'industrie, notamment dans des domaines techniques tels que l'aéronautique, l'énergie, la climatologie et les sciences de la vie. Ces calculs sont généralement mis en oeuvre par des clusters. L'objectif de ces clusters est de dépasser les limites du matériel existant en mutualisant des ressources pour permettre l'exécution parallélisée d'instructions et l'agrégation de capacité mémoire et de disque. Un cluster, est un ensemble de moyens de calcul (aussi appelés nœuds) interconnectés par un réseau d'interconnexion pouvant réaliser des opérations communes.

Le calcul à haute performance (HPC) est adopté par de plus en plus de scientifiques pour les aider à résoudre leurs problèmes complexes. En particulier, avec une augmentation entre 2017 et 2018 de plus de 50% de la puissance de l'ordinateur le plus puissant au monde, la puissance de calcul des supercalculateurs augmente sans cesse. De plus, il existe un nombre croissant de centres de calcul (locaux, régionaux, nationaux et internationaux) dotés de systèmes de classe pétaflopes.

Au-delà de la puissance de calcul, les scientifiques utilisateurs souhaitent pouvoir disposer de portails permettant de rapidement disposer d'un accès facilité et en exclusivité à un ensemble de ressources de calcul haute performance répondant à leur besoin. Ainsi, en parallèle de l'augmentation régulière de la taille des clusters, il est apparu de nouvelles fonctionnalités de multi-location d'infrastructure HPC permettant des accès ponctuels, sécurisés et exclusifs à certains de ces moyens de calcul ou noeuds.

Ainsi, le domaine de l'HPC fait face à une augmentation de la taille des infrastructures et du nombre de moyens de calcul d'une part et à une augmentation de la quantité d'utilisateurs souhaitant accéder en exclusivité à un ensemble de moyens de calculs pouvant répondre à leurs besoins en ressources. Néanmoins, tous ces utilisateurs finaux ont une connaissance scientifique approfondie dans leurs domaines mais pas nécessairement en HPC. Considérant l'augmentation de la taille des clusters et la non spécialisation des utilisateurs, il est devenu de plus en plus difficile d'identifier rapidement puis d'allouer les moyens de calcul permettant de répondre à un besoin donné.

Il existe des planificateurs ou ordonnanceurs permettant, au sein d'un ensemble de ressources réservées, de répartir les taches de calcul entre les moyens de calcul et de les ordonner. Néanmoins, ces procédés et dispositifs n'interviennent qu'une fois que les moyens de calcul ont été alloués et ne permettent pas à un opérateur de rapidement identifier les noeuds à allouer.

Il existe également dans le domaine de la virtualisation des procédés et des dispositifs d'allocation de ressources de type espace de stockage et puissance CPU. Néanmoins ces procédés ou dispositifs, adaptés à la segmentation de ressources d'un moyen de calcul entre plusieurs utilisateurs, ne sont pas adaptés à l'allocation de plusieurs moyens de calcul d'un système HPC où la non segmentation des ressources et la diversité des moyens de calcul impliqués rend difficile l'automatisation de l'allocation.

Partant, sur la plupart des plateformes HPC, l'allocation de ressources se fait aujourd'hui encore de façon manuelle et devient de plus en plus complexe avec l'augmentation du nombre et de la diversité des moyens de calcul agrégés.

Ainsi, il existe un besoin pour de nouveaux procédés et dispositifs capables d'aider des opérateurs d'infrastructure informatique HPC à la planification et à l'allocation de moyens de calcul.

### [Problème technique]

L'invention a donc pour but de remédier aux inconvénients de l'art antérieur. En particulier, l'invention a pour but de proposer un procédé d'aide à l'allocation de moyens de calcul permettant de gérer la quantité et la diversité des moyens de calcul composant une infrastructure d'HPC. Le procédé prend en compte la non spécialisation des utilisateurs en informatique et la granularité bien plus élevée que pour les machines virtuelles où se sont des portions de moyens de calculs qui sont attribués et non de plusieurs machines de différentes catégories. L'invention a en outre pour but de proposer un dispositif d'aide à l'allocation de moyens de calcul pouvant se positionner à l'interface entre les utilisateurs, les opérateurs et le système HPC sans en complexifier le fonctionnement.

### [Brève description de l'invention]

A cet effet, l'invention porte sur un procédé d'aide à la décision pour l'allocation de moyens de calcul sur une infrastructure de calcul haute performance permettant une identification d'un ensemble d'instances répondant à un besoin en ressources, ledit procédé étant mis en oeuvre par un dispositif informatique comportant un module de communication, un module de traitement de données, un module de gestion de réservation et un module de mémorisation configuré pour stocker un référentiel de classe de ressources, un référentiel de réservations et un référentiel de mots-clés, ledit procédé comportant les étapes suivantes :
- Réception, par le module de communication, d'un message de requête comportant des données relatives à un besoin en ressources pendant une durée donnée ;
- Identification, par le module de traitement de données, dans le message de requête de :
   ∘ une durée de commande,
   ∘ un ou de plusieurs mots clés référencés dans le référentiel de mots-clés, et
   ∘ une ou plusieurs valeurs de commande, chacune desdites valeurs de commande correspondant à une valeur numérique associée à un mot clé référencé identifié ;
- Calcul à partir des valeurs de commande, par le module de traitement de données, d'une ou de plusieurs valeurs d'instances requises, chacune correspondant à une valeur numérique associée à une classe de ressources référencée dans le référentiel de classe de ressources, ladite valeur numérique correspondant à une quantité de moyens de calcul requis pour répondre au besoin en ressources ; et
- Comparaison à partir du référentiel de réservation, par le module de gestion de réservation, des une ou plusieurs valeurs d'instances requises calculées à des valeurs d'instances disponibles sur une durée au moins égale à la durée de commande, de façon à identifier un ensemble d'instances par classe de ressources répondant au besoin en ressources et une période de disponibilité.

Un tel procédé permet de gérer facilement les allocations ou réservations de ressources sur une plateforme d'HPC et de partager cette information au sein d'une équipe d'opérateurs en charge de la gestion et de l'administration de ces ressources (e.g. administrateurs, commerciaux ou ressources avant-vente). En particulier, un tel procédé permet d'analyser un message de requête et de le comparer aux données de ressources, de façon à pouvoir rapidement identifier quelles ressources pourraient répondre aux besoins d'un utilisateur et à quel moment. Ainsi, il est possible de déterminer simplement si, et quand, les ressources demandées sont susceptibles d'être disponibles. Un tel procédé permet de répondre aux difficultés techniques rencontrées dans la gestion des ressources et des capacités dans les HPC mais également de résoudre les problèmes combinatoires associés à l'attribution de moyens de calcul, de faciliter la prise de décision, et plus généralement de garantir la bonne gestion de l'environnement informatique. Cela est particulièrement avantageux pour une infrastructure de calcul haute performance qui comprend, contrairement infrastructures généralistes qui font l'hypothèse d'être surcapacitaires, un nombre limité de ressources informatique. Par ailleurs, avantageusement les instances sont fédérées en grappes et préinstallées avec des applications utilisant les calcul haute performance. Ces applications sont de préférence des applications parallèles scientifiques prêtes à être utilisées sans connaissances en calcul haute performance.

**Selon d'autres caractéristiques optionnelles du procédé** :
- chaque instance peut être associée à un identifiant unique, ledit procédé peut en outre comprendre une étape de génération d'un message de pré-réservation comportant les identifiants uniques des instances identifiées comme répondant au besoin en ressources. Cela permet avantageusement d'identifier les instances particulières pouvant répondre au besoin en ressource réceptionné.
- ledit procédé peut avantageusement comprendre une étape de génération d'une représentation graphique des une ou plusieurs valeurs d'instances requises, chacune associée à une classe de ressources en fonction du temps. La génération d'une telle représentation graphique peut avantageusement fournir à un opérateur une pluralité d'informations facilitant une prise de décision quant à l'allocation d'instances à un client pour une durée et pour une utilisation déterminées.
- le message de requête peut comporter des données relatives à une période de temps relative au besoin en ressources et en ce que l'étape d'identification comporte l'identification dans le message d'une période de temps de commande correspondant à la période de temps pendant laquelle le besoin en ressource est demandé. Cela permet de faciliter la gestion des informations, notamment de l'allocation des instances par un opérateur.
- ledit procédé peut comprendre une étape de modification, par un module de gestion de réservation, du référentiel de réservation suite à la réception, par le module de communication, d'un message de confirmation de réservation de l'ensemble d'instances adaptées. Cela permet de faciliter la gestion du référentiel de réservation par la mise à jour systématique des données relatives à chaque instance.
- le message de confirmation de réservation peut comporter un indice de disponibilité associé à chacune des instances, ledit indice de disponibilité prenant une valeur sélectionnée parmi au moins trois valeurs, de préférence parmi trois valeurs. Cela permet d'améliorer la gestion des informations relatives à chaque instance du référentiel de gestion de réservation.
- le module de gestion de réservation peut avantageusement être configuré de façon à générer une alerte lorsque le référentiel de réservation comporte deux valeurs différentes d'indice de disponibilité pour une même instance. Cela permet avantageusement d'éviter à un opérateur toute erreur d'allocation en lien avec la disponibilité de chaque instance.
- ledit procédé peut comprendre, lorsque l'étape de comparaison ne permet pas d'identifier un ensemble d'instances répondant au besoin en ressources, une étape d'identification d'instances alternatives, ladite étape comportant la sélection d'une ou de plusieurs combinaisons de classes de ressources alternatives et de durées de réservations permettant un service rendu équivalent au besoin en ressource, puis une étape de comparaison des classes de ressources alternatives et de leur valeurs d'instances alternatives requises aux classes de ressources des instances disponibles du référentiel de réservation. Ainsi, si les instances les plus adaptées ne sont pas disponibles, le procédé reste en mesure d'identifier des instances pouvant constituer une solution alternative pour répondre au besoin en ressources.

Selon un autre aspect, l'invention porte sur un dispositif informatique d'aide à la décision pour l'allocation de moyens de calcul sur une infrastructure de calcul haute performance, ledit dispositif informatique comportant en outre un module de mémorisation configuré pour stocker un référentiel de classe de ressources, un référentiel de réservations et un référentiel de mots-clés, un module de communication, un module de traitement de données, un module de gestion de réservation, et :
- le module de communication pouvant être configuré pour recevoir un message de requête comportant des données relatives à un besoin en ressources pendant une durée donnée ;
- le module de traitement de données étant avantageusement configuré pour identifier dans le message de requête : une durée de commande, un ou plusieurs mots clés référencés dans le référentiel de mots-clés, et une ou plusieurs valeurs de commande, chacune desdites valeurs de commande correspondant à une valeur numérique associée à un mot clé référencé identifié ;
- le module de traitement de données étant avantageusement configuré pour calculer, à partir des valeurs de commande, une ou de plusieurs valeurs d'instances requises, chacune correspondant à une valeur numérique associée à une classe de ressources référencée dans le référentiel de classe de ressources, ladite valeur numérique correspondant à une quantité de moyens de calcul requis pour répondre au besoin en ressources ; et
- le module de gestion de réservation pouvant être configuré pour comparer à partir du référentiel de réservation, les une ou plusieurs valeurs d'instances requises calculées à des valeurs d'instances disponibles sur une durée au moins égale à la durée de commande, de façon à identifier un ensemble d'instances par classe de ressource répondant au besoin en ressources et une période de disponibilité.

Un dispositif informatique selon l'invention permet de faciliter la gestion d'une pluralité de moyens de calcul (i.e. instances) de classes de ressource différentes en fonction des besoins en ressource d'un client pour une durée donnée d'une part et de la disponibilité desdites ressources pour ladite durée. En outre, un tel dispositif informatique présente l'avantage de centraliser la gestion des instances d'une infrastructure de type HPC et de restituer à un opérateur des données facilitant la prise de décision concernant la gestion de l'allocation d'instances au sein de l'infrastructure de type HPC. Ainsi grâce à un dispositif informatique conforme à l'invention, il est possible, pour un opérateur, de gérer plus aisément l'allocation d'une pluralité d'instances de classes de ressources différentes sur une période donnée, notamment en optimisant l'utilisation des instances en fonction des besoins en ressource et en évitant toute erreur d'allocation en lien avec lesdites instances.

Selon un autre aspect, l'invention porte sur un système comportant une infrastructure de calcul haute performance et un dispositif informatique conforme à l'invention, d'aide à la décision pour l'allocation de moyens de calcul sur ladite infrastructure de calcul haute performance.

Selon un autre aspect, l'invention porte en outre sur un produit programme d'ordinateur comportant une ou plusieurs instructions interprétables ou exécutables par un module de traitement de données d'un dispositif informatique selon l'invention, l'interprétation ou l'exécution desdites instructions par ledit module de traitement de données provoquant la mise en œuvre d'un procédé conforme à l'invention.

Selon un autre aspect, l'invention porte en outre sur un support d'enregistrement tangible, lisible par un ordinateur, sur lequel est enregistré de manière non-transitoire un produit programme d'ordinateur selon l'invention.

D'autres avantages et caractéristiques de l'invention apparaitront à la lecture de la description suivante donnée à titre d'exemple illustratif et non limitatif, en référence aux Figures annexées :
[Fig 1] représente un schéma d'un système de calcul haute performance comportant un dispositif informatique, une pluralité d'instances par classe de ressources et une interface homme-machine.
[Fig 2] représente un schéma d'un dispositif informatique selon l'invention.
Les figures 3A, 3B, et 3C représentent respectivement un référentiel de mots-clés, un référentiel de classe de ressources et un référentiel de réservations.
[Fig 4] représente un schéma d'un procédé d'aide à la décision pour l'allocation de moyens de calcul sur une infrastructure de calcul haute performance selon l'invention. Les étapes encadrées par des pointillés sont facultatives.
[Fig 5] représente un schéma d'un mode de réalisation d'un procédé conforme à l'invention.
[Fig 6] représente un schéma d'un exemple d'une représentation graphique d'une ou plusieurs valeurs d'instances requises par classe de ressources en fonction du temps. Les crochets représentent une période de commande.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques

### [Description de l'invention]

Dans la suite de la description, on entend par « infrastructure de calcul haute performance » ou « infrastructure de type HPC » (pour « high performance computing » en terminologie anglosaxonne), un ensemble de ressources informatiques (i.e. des ressources matérielles et des ressources logicielles) permettant l'exécution de tâches de calcul ou le stockage de données numériques. Ces ressources comprennent par exemple, et de manière non limitative : des composants électroniques de calcul rapides (par exemple des processeurs multicœurs ou des cartes graphiques dédiées au calcul scientifique de dernière génération), de la mémoire vive, et des équipements de stockage de masse (ou mémoires secondaires), en particulier des disques durs en grande quantité. D'un point de vue fonctionnel, un HPC est une machine qui agrège les équipements/ressources ci-dessus pour former un cluster de calcul. Au sens de l'invention, l'infrastructure de calcul haute performance peut également comporter des moyens de calcul permettant des processus d'intelligence artificielle tels que des processus d'apprentissage profond ou encore des moyens de calcul quantiques. Tous ces équipements sont généralement associés à un système d'exploitation (OS, de l'anglais « Operating System »). Le système d'exploitation est par exemple Windows (marque enregistrée), ou plus fréquemment UNIX (marque enregistrée) ou l'une de ses déclinaisons comme Linux (marque enregistrée). Un logiciel s'exécutant sur cet OS, peut assurer la gestion globale des ressources matérielles en tirant profit de leurs potentialités en termes de performance, notamment en exploitant le parallélisme et en rendant transparente la distribution des ressources.

Par « dispositif informatique », on entend, au sens de l'invention, tout dispositif apte à faire fonctionner un ou plusieurs processus. D'un point de vue structurel, un dispositif informatique pourra comporter un moyen de calcul tel qu'un processeur, un moyen de stockage, un circuit imprimé et des bus de communication configurés pour permettre la communication entre composants du dispositif informatique.

Par « instance » ou « moyen de calcul », on entend, au sens de l'invention, tout dispositif informatique apte à faire fonctionner un ou plusieurs processus, tel qu'un nœud de calcul d'un calculateur à haute performance, un nœud graphique permettant la restitution visuelle à un opérateur au travers d'une interface homme-machine ou encore un nœud de stockage. D'un point de vue structurel, une instance peut correspondre à une lame (i.e. un circuit imprimé). La totalité ou la majorité des instances peuvent, à titre d'exemples non limitatifs, être des lames de calcul, ou encore des supports de stockage de données. Des supports de stockage de données comprennent les disques de stockage de données constituant un système de stockage physique, sur lequel est monté un système de fichiers (en anglais « File System », ou FS), comme par exemple GPFS (« General Parallel File System »), qui permet le stockage distribué de fichiers sur un grand nombre de supports physiques, pouvant dépasser le millier.

On entend par « disponibilité d'une instance », toute instance N1, Ni non allouée, c'est-à-dire présentant dans un champ R de la structure de données, d'un référentiel de réservation, un indice de disponibilité traduisant l'état d'une instance N1, Ni.

On entend par « classe de ressources » une ou plusieurs instances N1, Ni d'un type donné, tels qu'à titre d'exemples non limitatifs de type graphique, calcul ou encore stockage.

On entend par « référentiel », un ensemble de données statiques décrites dans une mémoire de données d'un dispositif informatique. Lesdites données pouvant éventuellement être structurées sous la forme d'une table de référence, de matrice ou encore d'une base de données. Les référentiels sont agencés pour être accessibles en lecture et/ou écriture, en fonction des droits des utilisateurs, notamment pour la mise à jour des données en lien avec chaque référentiel.

L'expression « durée de commande » correspond au sens de l'invention à la durée (en unité temporelle) pendant laquelle les ressources seront nécessaires et seront donc monopolisées par un utilisateur.

L'expression « période de commande » correspond au sens de l'invention à un intervalle de temps, préférentiellement mais non limitativement exprimé sous le format « jour/mois/année de début - jour/mois/année de fin », pendant lequel les ressources pourraient être monopolisées pour la durée de commande requise. Par exemple, une période de commande correspond à la latitude temporelle dont dispose l'utilisateur pour l'accès à ces ressources. Ainsi des ressources disponibles en dehors de cette période de commande ne lui seraient pas utiles. La période de commande correspond à une durée supérieure ou égale à la durée de commande.

L'expression « période de disponibilité » correspond au sens de l'invention à un intervalle de temps, préférentiellement mais non limitativement exprimé sous le format « jour/mois/année de début - jour/mois/année de fin », pendant lequel les ressources adéquates (en quantité et qualité) sont disponibles. Ainsi, la période de disponibilité correspond à une durée supérieure ou égale à la durée de commande.

On entend par « traiter », « calculer », « déterminer », « afficher », « identifier » « comparer », toute opération exécutable par un dispositif ou un processeur sauf si le contexte indique autrement. À cet égard, les opérations se rapportent à des actions et/ou des processus d'un module de traitement de données, par exemple d'un système informatique ou d'un dispositif informatique électronique, ou encore d'un dispositif informatique, tel qu'un serveur distant, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « application », « logiciel », « code de programme », et « code exécutable » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « processeur », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « couplé », au sens de l'invention, connecté, directement ou indirectement avec un ou plusieurs éléments intermédiaires. Deux éléments peuvent être couplés mécaniquement, électriquement ou liés par un canal de communication.

L'expression « interface homme-machine » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

Dans la suite de la description, les mêmes références sont utilisées pour désigner les mêmes éléments.

La puissance de calcul, des calculateurs hautes performances, augmente sans cesse, cette augmentation s'accompagne de l'apparition d'un nombre croissant de centres informatiques dotés de systèmes de classe pétaflopique, de plus en plus utilisés dans les milieux universitaires et de l'industrie au quotidien dans de nombreux domaines techniques tels que l'aéronautique, l'énergie, la climatologie et les sciences de la vie. Ainsi, la démocratisation de tels calculateurs s'accompagne de la nécessité de faciliter l'accès à ces calculateurs hautes performances au travers de portails permettant de rapidement disposer d'un accès facilité et en exclusivité à un ensemble de ressources de calcul haute performance en fonction des besoins requis. Or, il est devenu de plus en plus difficile d'identifier rapidement, les besoins d'un utilisateur d'une part puis d'identifier et d'allouer les moyens de calcul permettant de répondre auxdits besoins d'autre part. Également, conjointement aux problématiques d'allocations évoquées précédemment, le nombre et la diversité des ressources disponibles dans le temps représentent un vrai défi technique pour la gestion et l'allocation des ressources par un opérateur.

Ainsi, les inventeurs ont développé un nouveau procédé d'aide à la décision pour l'allocation de moyens de calcul sur une infrastructure de calcul haute performance pouvant être mis en oeuvre par un dispositif informatique, au sein d'un système de calcul haute performance comportant une pluralité d'instances pouvant être organisées par classe de ressource et une interface homme-machine.

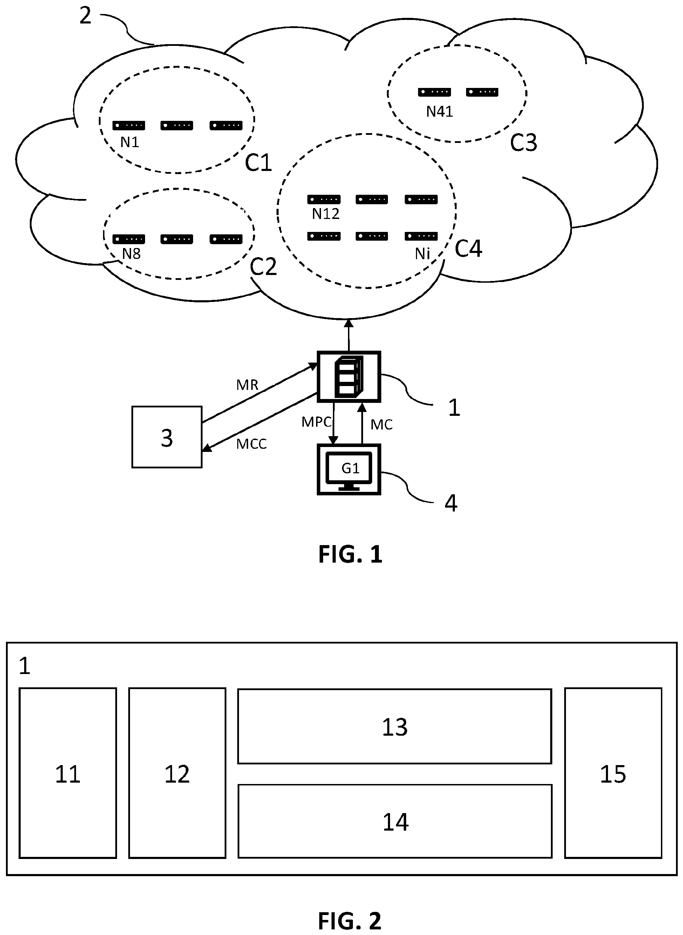

La **figure 1** illustre schématiquement un système de calcul haute performance selon l'invention. L'invention concerne ainsi tout **système de calcul haute performance** comportant une pluralité d'instances N1, Ni constituant une infrastructure 2 de calcul haute performance et un dispositif 1 informatique d'aide à la décision pour l'allocation de moyens de calcul sur ladite infrastructure 2 de calcul haute performance selon l'invention.

Plus particulièrement, le système de calcul haute performance peut comporter différents dispositifs informatiques configurés pour communiquer avec le dispositif 1 selon l'invention. De tels dispositifs informatiques peuvent héberger des clients communiquant avec le dispositif 1 selon l'invention et l'infrastructure 2 de calcul haute performance. Le système selon l'invention peut par exemple comporter un dispositif 3 informatique à disposition d'un utilisateur et comportant un client configuré pour échanger avec le dispositif 1 de façon à réserver des moyens de calculs N1, Ni et pour échanger avec l'infrastructure 2 de calcul haute performance de façon à lui soumettre des taches de calcul. Le système selon l'invention peut également comporter un dispositif 4 informatique à disposition d'un opérateur et comportant un client configuré pour échanger avec le dispositif 1 de façon à réserver des moyens de calculs N1, Ni et pour afficher une représentation graphique G1 de l'ensemble desdites instances N1, Ni répondant à un besoin en ressources.

**Selon un autre aspect,** l'invention porte sur un **dispositif 1 informatique d'aide à la décision pour l'allocation de moyens de calcul** sur une infrastructure de type HPC. Un exemple de dispositif 1 informatique conforme à l'invention est notamment décrit en lien avec **la** **figure 2****.** Comme évoqué précédemment, un dispositif 1 informatique conforme à l'invention peut consister en un serveur. Plus particulièrement, le dispositif 1 informatique comporte un module de mémorisation 11, un module de communication 12, un module de traitement de données 13 et un module de gestion de réservation 14. Les différents modules ou référentiels sont distincts sur la figure 2 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique.

Un dispositif 1 informatique conforme à l'invention peut avantageusement comprendre un **module de mémorisation 11** configuré pour stocker une pluralité de référentiels facilitant la gestion et l'allocation des ressources. De tels référentiels sont avantageusement paramétrables, c'est-à-dire qu'ils peuvent être accessibles en écriture, par exemple pour ajouter, supprimer et/ou modifier des données propres à un référentiel donné, par un opérateur par exemple au travers d'une interface homme-machine 15.

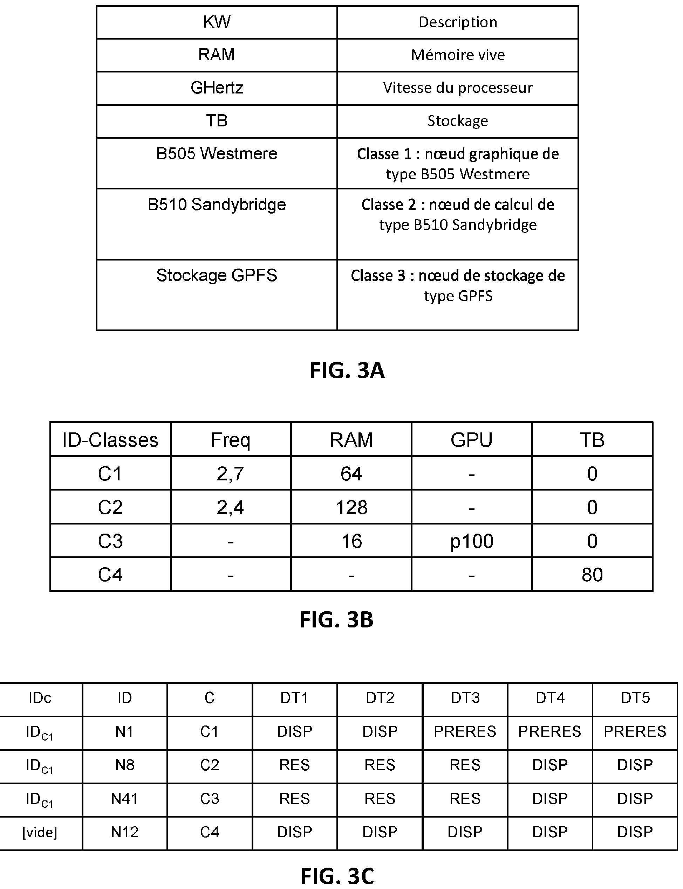

Avantageusement mais non limitativement, un premier référentiel peut consister en un **référentiel de mots-clés.** En effet, afin que le dispositif 1 selon l'invention soit en mesure d'identifier et d'extraire des informations pertinentes sur le besoin en ressources d'un utilisateur, le dispositif peut comporter un référentiel comportant une pluralité de mots-clés. De préférence, chaque mot-clé peut consister en une valeur alphanumérique, telle qu'un seul mot ou une expression, décrivant une caractéristique matérielle ou logicielle d'un dispositif informatique et plus particulièrement d'une instance N1, Ni. Ainsi, le référentiel mots-clés, tel que présenté en lien avec la figure 3A, peut avantageusement comporter un premier champ KW comprenant une valeur alphanumérique constituant un mot-clé, tels que les mots-clés : GB, GHz, To ; respectivement associés à la mémoire vive, la vitesse du processeur ou la capacité de stockage du disque dur dont la description peut être précisée dans un deuxième champ « Description ». En outre, le référentiel de mots-clés peut permettre d'établir des ensembles de mots-clés relatifs à un même objet.

Dans un mode de réalisation particulier mais non limitatif, un référentiel de mots-clés peut comprendre un ou plusieurs valeurs alphanumériques associées à une classe de ressources C1, C2, C3, C4, tels que les mots-clés « B505 Westmere », « B510 Sandybridge », « stockage GPFS » respectivement associés à la Classe 1 : nœud graphique de type B505 Westmere, la Classe 2 : nœud de calcul de type B510 Sandybridge et à la Classe 3 : nœud de stockage de type GPFS.

De manière avantageuse mais non limitative, un deuxième référentiel peut consister en **un référentiel de classe de ressources.** Les ressources d'une infrastructure HPC peuvent avantageusement consister en une pluralité d'instances, telles que définies précédemment, d'éléments matériels et logiciels différents. Un tel référentiel permet de faciliter la gestion des ressources disponibles au sein d'une infrastructure HPC. A titre d'exemples, une instance peut consister en :
- un nœud dit « graphique », de type « B505 Westmere, 2.67 GigaHertz avec 24 GigaBytes de mémoire vive, 128 GigaBytes de disque local SSD (pour « solid-state drive », selon une terminologie anglo-saxonne) et deux cartes nVidia M2070-Q » ;
- un nœud dit de « calcul », de type « B510 SandyBridge, 2.60 GigaHertz avec 64GigaBytes de mémoire vive et 256 GigaBytes de disque local SSD » (pour « solid-state drive », selon une terminologie anglo-saxonne) ;
- un nœud dit de « stockage », de type « système de stockage hautes performances GPFS » (pour « general parallel file system » selon une terminologie anglo-saxonne) attaché à une baie de stockage VNX5500 EMC.

Les ressources d'une infrastructure HPC peuvent ainsi comprendre plusieurs centaines d'instances. Pour faciliter la gestion et l'allocation de telles instances, notamment en fonction des besoins d'un utilisateur, les instances peuvent être regroupées par classe de ressources C1, C2, C3, C4. Ainsi, comme illustré à la **figure 3B****,** le référentiel de classe de ressources comporte avantageusement une pluralité de classe de ressources identifiées par un identifiant unique ID-Classes et caractérisées par des valeurs numériques associées des descriptifs de ressources, lesdits descriptifs de ressources étant de préférence sélectionnés parmi les mots-clés du référentiel de mots-clés.

Comme illustré à la figure 3B, on comprendra que selon l'architecture HPC considérée, deux classes C1, C2, puissent correspondre à des instances différentes de type « calcul », les instances N1, Ni desdites deux classes pouvant notamment différer par des caractéristiques matérielles, tel que le processeur et/ou la mémoire vive. De même, une classe C3 peut correspondre à un nœud de visualisation tandis qu'une classe C4 peut correspondre à un nœud de stockage.

Le regroupement d'instances en classe de ressources C1, C2, C3, C4 permet en outre de factoriser la description d'un grand nombre de moyens de calculs identiques, plus particulièrement d'instances N1, Ni présentant des caractéristiques matérielles et/ou logicielles identiques et *in fine* facilite la gestion desdites ressources par un opérateur. Chaque instance N1, Ni peut avantageusement appartenir à une seule classe de ressources C1, C2, C3, C4.

Préférentiellement mais non limitativement, des champs du référentiel de classes de ressources peuvent être associés à une valeur numérique. A titre d'exemple, une telle valeur numérique pourra être associée à la vitesse d'un processeur, ou encore à la capacité en mémoire d'un disque dur, ou plus généralement toute caractéristique matérielle et/ou logicielle d'une instance N1, Ni et plus largement d'une classe de ressources. Ainsi, un nœud dit « graphique », de type « B505 Westmere, 2.67Giga Hertz avec 24 GigaBytes de mémoire vive, 128 GigaBytes de disque local SSD (pour « solid-state drive », selon une terminologie anglo-saxonne) et deux cartes nVidia M2070-Q » pourrait être inscrit un référentiel de réservation de la manière suivante : 2,67 GHz, 24 GB, 128 Go, 2 M2070Q.

Le module de mémorisation 11 peut avantageusement être configuré pour stocker un troisième référentiel consistant en un **référentiel de réservations.** Le référentiel de réservation permet notamment de déterminer quelles instances sont disponibles en fonction du temps (e.g. par périodes de temps). Ainsi, il comporte en particulier un indice de disponibilité pour chaque instance et par période de temps. Un tel indice de disponibilité peut consister en toute valeur alphanumérique, telles qu'à titre d'exemples non limitatifs les valeurs « PRERES », « RES » et « DISP » décrivant respectivement une instance préréservée, une instance réservée et une instance disponible. A titre d'exemples, un tel référentiel de réservation, décrit en lien avec la **figure 3C****,** peut avantageusement comporter une pluralité de champs, notamment :
- un champ ID_{C} décrivant l'identifiant d'un utilisateur ;
- un champ ID relatif à l'identification d'une instance N1, Ni ;
- un champ C décrivant une classe de ressources C1, C2, C3, C4 d'une instance N1, Ni ;
- un ou plusieurs champ DT1, DT2, DT3, DT4, DT5 décrivant l'état PRES, RES ou DISP de chaque instance par intervalle de temps ; l'intervalle de temps étant paramétrable.

Dans un mode de réalisation particulier un module de mémorisation 11 peut avantageusement être configuré pour stocker un quatrième référentiel consistant en un **référentiel d'accès,** afin de faciliter la planification de l'allocation des ressources.

A l'instar des référentiels précédemment décrit, un tel référentiel d'accès peut comporter plusieurs champs, un premier champ encodant avantageusement un identifiant d'un utilisateur et un deuxième champ encodant des données relatives à la description dudit utilisateur, tels qu'à titre d'exemples non limitatifs un nom associé à l'identifiant de l'utilisateur ou encore les coordonnées du siège social de l'établissement auquel les ressources sont allouées. Le référentiel d'accès peut également comporter un champ comportant pour chaque utilisateur un indice de priorité. L'indice de priorité étant attribué à des utilisateurs de façon à pouvoir gérer des conflits d'attribution de ressources

Comme illustré à la figure 2, un dispositif 1 informatique peut comprendre un **module de communication 12.** Le module 12 de communication permet en outre, de transmettre les données sur au moins un réseau de communication et peut comprendre une communication filaire ou sans fil. En particulier, le module 12 de communication permet par exemple de recevoir et de transmettre des informations à des systèmes distants tels que des tablettes, des téléphones, des ordinateurs ou des serveurs. Ces échanges de données peuvent prendre la forme d'envoi et de réception de fichiers.

En particulier, le module de communication 12 permet une communication entre le dispositif 1 informatique et des dispositifs informatique tiers tels qu'un dispositif 3 informatique utilisable par un utilisateur de l'infrastructure 2 de calcul haute performance et un dispositif 4 informatique utilisable par un opérateur de l'infrastructure 2 de calcul haute performance. Ainsi, le module de communication 12 est avantageusement configuré pour recevoir un message de requête MR. Le message de requête peut être émis par un client de messagerie, un client web (e.g. utilisant un langage http) ou tout autre client permettant à un utilisateur ou un opérateur d'envoyer un message de requête comportant des données sur un besoin en ressources de l'HPC. Comme cela sera abordé par la suite, le module de communication 12 peut aussi être configuré pour émettre un message de confirmation MC. Le client est généralement, tout matériel et/ou logiciel susceptible d'accéder au dispositif 1 selon l'invention.

Dans un mode de réalisation particulier mais non limitatif, un dispositif 1 informatique peut également comprendre un **module de traitement de données 13,** configuré pour identifier une ou plusieurs données dans le message de requête MR. Grace à cela, il peut identifier, dans un message de requête formaté ou non formaté, et extraire des informations nécessaires à la caractérisation d'un besoin en ressources.

Le module de traitement de données 13 est ainsi configurer pour extraire tout ou partie des données présentes dans le message de requête MR. Il est avantageusement configuré pour identifier dans le message de requête MR une durée de commande D. Cette durée de commande D correspond à la durée de réservation qu'un utilisateur estime nécessaire pour répondre à son besoin en ressources.

En outre, le module de traitement de données 13 est avantageusement configuré pour identifier dans le message de requête MR un ou plusieurs mots clés correspondant à des mots clés KW₁,KWₙ référencés dans un référentiel de mots-clés. Le module de traitement de données 13 est en outre configuré pour, lorsqu'un mot clé référencé KW₁,KWₙ a été identifié, identifier une ou plusieurs valeurs de commande, chacune desdites valeurs de commande correspondant à une valeur numérique associée à un mot clé référencé identifié KW₁,KWₙ.

De plus, le module de traitement de données 13 peut être configuré pour calculer, à partir des valeurs de commande et à partir des données de classe C1, C2, C3, C4 de ressource référencée dans le référentiel de classe de ressources, au moins une valeur d'instance VIₙ requise correspondant à une valeur numérique associée à une classe de ressources référencée et reflétant une quantité de moyens de calcul requis pour répondre au besoin en ressources.

Le dispositif 1 informatique peut également comprendre un **module de gestion de réservation 14,** configuré de façon à identifier un ensemble d'instances par classe de ressource répondant au besoin en ressources. En particulier, il peut être configuré pour comparer une ou plusieurs valeurs d'instances VIₙ requises à des valeurs d'instances N1, Ni disponibles sur une durée au moins égale à la durée de commande D. Comme cela a été abordé, les valeurs d'instances N1, Ni disponibles sont issues du référentiel de réservation.

Un tel dispositif 1 informatique est avantageusement agencé pour communiquer via interface homme-machine 15 à partir de laquelle un utilisateur ou opérateur peut interagir, tel qu'à titre d'exemple non limitatif au travers d'un réseau de communication filaire, ou encore via un réseau sans fil. Ainsi, l'interface homme-machine 50 peut être mettre en oeuvre une application cliente, tel qu'un navigateur Web FireFox ^{®}, Fennec ^{®}, Opéra ^{®}, Opéra Mobile ^{®}, Internet Explorer^{®}, Google Chrome^{®} par exemple, ou un navigateur ftp tel que FileZilla^{®}, permettant d'envoyer des instructions, par exemple au travers d'un message confirmation MC et/ou de recevoir tout type de messages, plus particulièrement des messages de réservation de ressources, tels qu'à titre d'exemples non limitatifs un message de pré-confirmation MPC de réservation, un message de confirmation MCC de réservation ou encore un message de requête MR.

**Selon un autre aspect,** l'invention porte sur **un procédé 100 d'aide à la décision pour l'allocation de moyens de calcul sur une infrastructure de calcul haute performance** permettant une identification d'un ensemble d'instances N1, Ni répondant à un besoin en ressources.

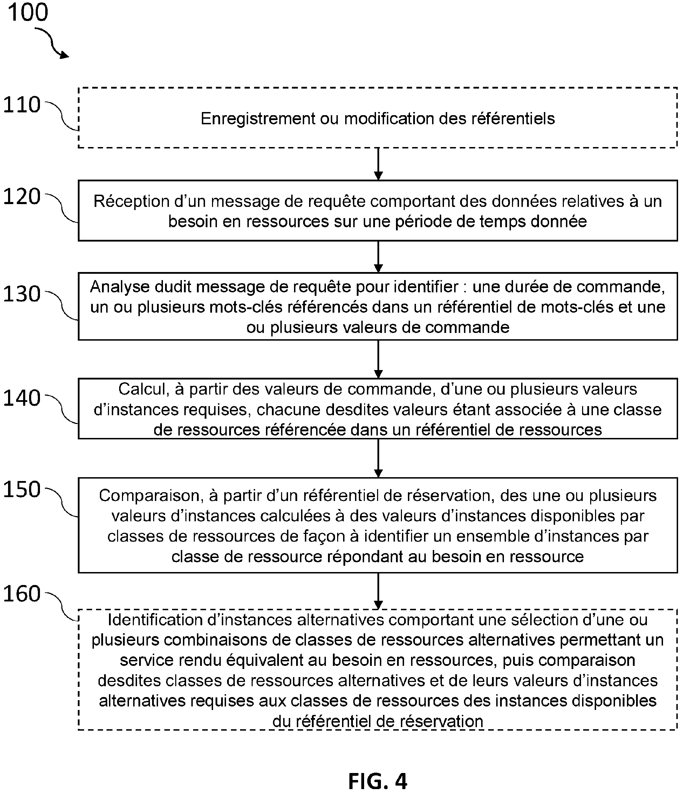

Comme cela est présenté dans **la** **figure 4****,** un procédé d'aide à la décision selon l'invention comprend une **étape facultative 110 de configuration d'un référentiel de classe de ressources, d'un référentiel de réservations et/ou d'un référentiel de mots-clés d'un dispositif 1 informatique selon l'invention.** Cette étape peut être réalisée par un opérateur au travers d'une interface homme-machine 15.

Cette étape de configuration peut permettre à un dispositif 1 informatique d'adapter ledit procédé à la diversité des instances N1, Ni et/ou des classes de ressources C1, C2, C3, C4 en permettant l'enregistrement et/ou la modification desdits référentiels directement dans le module de mémorisation 11 d'un dispositif 1 informatique.

Comme cela est présenté en figure 4, un tel procédé comprend une **étape de réception 120** d'un message de requête MR comportant des données relatives à un besoin en ressources pendant une durée donnée. Cette étape peut avantageusement être mise en oeuvre par un module de communication 12 tel que décrit précédemment.

Avantageusement, un message de requête MR peut être émis par une entité distante tiers 3 à destination du dispositif 1 informatique, notamment au travers d'une interface web dédiée à un dispositif 1 informatique, ou encore par l'envoi d'un message de requête MR sous n'importe quel format lisible par ledit dispositif 1 informatique, tels qu'à titre d'exemples non limitatifs au format http, SSH ou FTP.

Comme cela est présenté en figure 4, un procédé 100 d'aide à la décision pour l'allocation de moyens de calcul sur une infrastructure HPC selon l'invention permet l'analyse d'un message de requête MR au travers notamment **d'une étape d'identification 130** dans ledit message de requête MR d'une durée de commande D, d'un ou de plusieurs mots clés référencés KW₁, KWₙ dans un référentiel de mots-clés, et d'une ou plusieurs valeurs de commande. Cette étape d'identification 130 peut avantageusement être mise en oeuvre par un module de traitement de données 13 tel que décrit précédemment.

Les valeurs de commande correspondent à une valeur numérique associée à un mot clé référencé identifié et elles permettent avantageusement de quantifier de façon formelle le besoin en ressources. Ainsi, cette étape permet d'obtenir un besoin en ressources préalablement formulé au travers d'un message de requête MR. En effet, l'analyse dudit message de requête MR permet d'identifier la durée de commande D relative au besoin. De plus, l'identification de mots-clés KW₁,KWₙ référencés dans le référentiel de mots-clés et d'une valeur numérique associée à chacun de ces mots-clés identifié permet de quantifier le besoin en ressources sous la forme de valeurs de commande. L'identification 130 des valeurs de commande peut avantageusement consister en la mise en oeuvre d'un algorithme d'analyse textuel de type « parsing » selon une terminologie anglo-saxonne, ou de tout autre algorithme permettant d'identifier un mot-clé référencé associé à une valeur numérique correspondante.

Un procédé 100 d'aide à la décision pour l'allocation de moyens de calcul sur une infrastructure HPC selon l'invention comprend en outre **une étape de calcul 140 d'une ou de plusieurs valeurs d'instances VIₙ requises.** Cette étape de calcul 140 repose notamment sur les valeurs de commande préalablement calculées et sur le référentiel de réservation. Cette étape peut avantageusement être mise en oeuvre par un module de traitement de données 13 tel que décrit précédemment.

Lors de cette étape de calcul 140, le module de traitement de données 13 peut produire une ou plusieurs valeurs d'instances VIₙ, chacune desdites valeurs d'instance correspondant à une valeur numérique associée à une classe de ressources référencée dans le référentiel de classe de ressources. Cela permet dans un premier temps d'identifier une ou plusieurs classes C1, C2, C3, C4 de ressources répondant au besoin en ressources précédemment identifié dans le message de requête MR. En effet, comme détaillé précédemment, un besoin en ressources peut être de nature calculatoire et/ou de nature graphique, faisant ainsi appel à des classes de ressources C1, C2, C3, C4 totalement différentes. Cela permet *in fine* d'optimiser l'allocation de ressources par un opérateur, notamment en lui permettant d'identifier directement une ou plusieurs classes de ressources C1, C2, C3, C4 répondant à un besoin en ressources ainsi que les quantités d'instances associées.

En outre, cette étape permet d'obtenir une ou plusieurs valeurs numériques correspondant à une quantité de moyens de calcul requis pour répondre au besoin en ressources, chacune desdites valeurs numériques étant associées à une classe de ressources référencée dans le référentiel de classe de ressources.

Un procédé 100 d'aide à la décision pour l'allocation de moyens de calcul sur une infrastructure HPC selon l'invention comprend en outre une **étape de comparaison 150** permettant d'identifier un ensemble d'instances par classe de ressources C1, C2, C3, C4 répondant au besoin en ressources. En outre, elle permet d'identifier une période de disponibilité. Cette étape comporte notamment la comparaison d'une ou plusieurs valeurs d'instances VIₙ requises préalablement calculées à des valeurs d'instances disponibles, selon le référentiel de réservation, sur une durée au moins égale à la durée de commande D. Cette étape de comparaison 150 peut avantageusement être mise en oeuvre par un module de gestion de réservation 14 tel que décrit précédemment.

Cette étape permet avantageusement, à partir d'une ou plusieurs valeurs d'instances VIₙ requises préalablement calculées, d'identifier toutes les instances N1, Ni d'une classe de ressources C1, C2, C3, C4 donnée disponibles et permettant de répondre à un besoin en ressources sur une durée au moins égale à la durée de commande D préalablement identifiée. Ainsi, le procédé permet d'identifier un ensemble d'instances appartenant à une classe de ressource répondant au besoin. Il pourra en outre générer une pluralité d'identifiants d'instances N1, Ni permettant de répondre au besoin en ressources. Ainsi, le procédé permet de déterminer si l'infrastructure de calcul haute performance est en mesure de répondre au besoin et si oui avec quelle classe de ressources et en quelle quantité.

Un procédé 100 d'aide à la décision pour l'allocation de moyens de calcul sur une infrastructure HPC selon l'invention peut également comprendre **une étape d'identification 160 d'instances alternatives.** Une telle étape peut aboutir à l'identification d'un ensemble d'instances ne correspondant pas aux valeurs d'instances requises telles qu'identifiées à partir du message de requête MR mais consistant en des propositions d'instances permettant d'apporter une solution équivalente, ou de faire des contre-propositions équivalentes à la demande initiale de l'utilisateur, et qui lui permettra de mener à bien la campagne de calculs dans les temps qui lui sont impartis. Pour cela, cette étape d'identification 160 d'instances alternative peut par exemple comporter la sélection d'une ou de plusieurs combinaisons de classes de ressources C1, C2, C3, C4 alternatives et de durées de commandes alternatives permettant un service rendu équivalent au besoin en ressource.

En effet, comme détaillé précédemment, deux classes de ressources C1, C2 d'une infrastructure de type HPC peuvent différer par des caractéristiques matérielles, tel que le processeur ou la mémoire vive, définissant la puissance de calcul de chacune desdites deux classes de ressources. L'absence de disponibilité de l'une des deux classes de ressources C1 pour une durée donnée ne signifie pas forcément qu'aucune des ressources potentiellement disponibles ne puissent être mobilisées pour répondre au besoin en ressources préalablement identifié. Cela permet *in fine* d'optimiser l'allocation de ressources par un opérateur, notamment en lui permettant de sélectionner une classe de ressources C2 alternative pour répondre à un besoin en ressources. Dans le cas de solution alternative, la durée de commande alternative pourra être différente de la durée de commande identifiée.

L'étape d'identification est généralement suivie d'une étape de comparaison des classes de ressources alternatives et de leurs valeurs d'instances alternatives requises aux classes de ressources des instances disponibles du référentiel de réservation.

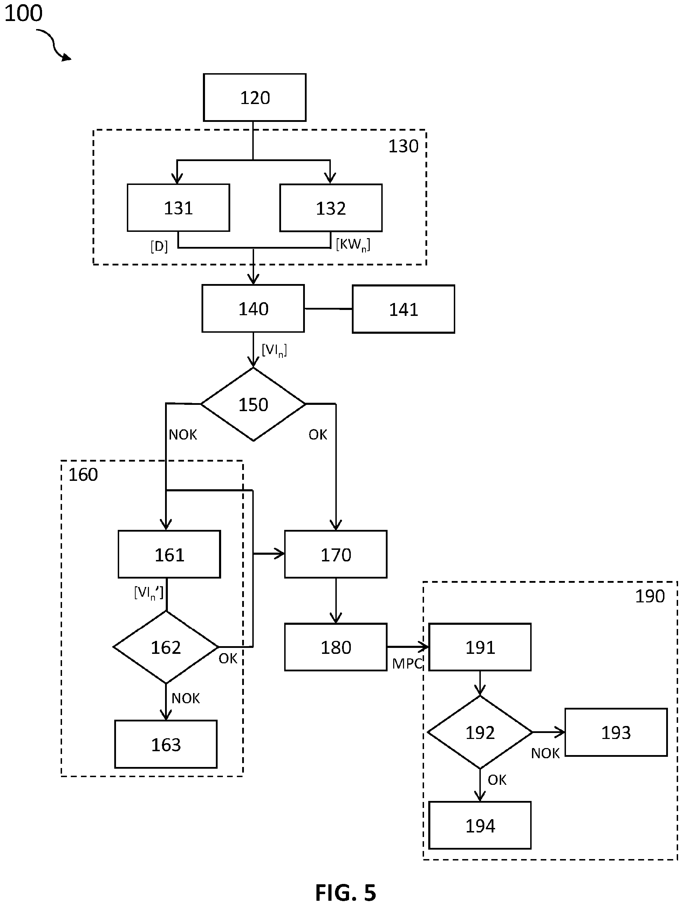

**La** **figure 5** représente un mode de réalisation particulier d'un procédé 100 selon l'invention, destiné à fournir une aide à la décision pour l'allocation de moyens de calcul sur une infrastructure HPC à un opérateur.

Ainsi, un procédé 100 conforme à l'invention comprend une étape 120 de réception d'un message de requête MR émis par une entité distante tiers 3 à destination d'un module de communication 12 d'un dispositif 1 informatique.

Le message de requête MR peut être un message non formaté généré par un utilisateur comportant par exemple le texte suivant : *« Bonjour [...] Nous souhaiterions disposer de 10 nœuds de calcul de type B510 SandyBridge ceux avec 64 GB de mémoire vive [...] nous pensons devoir les utiliser pendant environ 15 jours sur une période allant du 1^{er} juin au 15 juillet* ». Alternativement, le message peut également consister en un message structuré pouvant généré par un utilisateur ou un opérateur via une interface graphique de réservations comportant par exemple le texte suivant : <duration> 15 </duration> ; <periodB> 01/06/2018 </ periodB> ; <periodE> 15/07/2018 </periodE> ; <ClassA_type> B510 </ClassA_type > ; <ClassA_num> 10 </ClassA_num >

Ainsi, ces exemples de contenus de messages de requêtes illustre la présence dans le message de requête de mots clés : B510, SandyBridge, GB, mémoire vive, jours, de durée de commande : 15 et de valeurs de commande : 10.

A réception 120 d'un tel message de requête MR, une étape d'identification 130 est mise en oeuvre afin d'identifier une ou plusieurs données comprises dans le message de requête MR, telles que l'identification 131 d'une durée de commande D et l'identification 132 d'un ou plusieurs mots-clés KWₙ définissant ainsi un besoin en ressources pour une durée déterminée. Une valeur associée à chacun des mots-clés KWₙ ainsi identifiées est recherchée lors de l'étape d'identification 132, chaque valeur associée à chacun des mots-clés constituent respectivement des valeurs de commande associées au message de requête MR préalablement reçu.

L'étape d'identification 130 est suivie d'une étape de calcul 140 par le module de traitement de données d'un dispositif 1 informatique, afin de produire une ou plusieurs valeurs d'instance VIₙ, chacune desdites valeurs d'instances décrivant une valeur numérique associée à une classe de ressources C1, C2, C3, C4 référencée dans le référentiel de classe de ressources, indiquant ainsi un nombre d'instances N1, Ni pour chaque classe de ressources C1, C2, C3, C4 nécessaires, pour répondre au besoin en ressources préalablement identifié dans le message de requête MR. Les valeurs d'instances VIₙ ainsi calculées sont ensuite stockées dans un module de mémorisation 11 d'un dispositif 1 informatique lors d'une étape 141 de mémorisation. En outre, le procédé peut comporter lors de cette étape l'association d'une durée de commande D à chacune des valeurs d'instances comme cela est présenté dans le Tabl.1 ci-dessous.

**[Tableaux 1]**

| ID-Classes | VI | D |
|---|---|---|
| C1 | 10 | 15 |

Chacune des valeurs d'instances VIₙ est ensuite comparée, lors d'une étape de comparaison 150, à partir du référentiel de réservation, aux valeurs d'instances disponibles. Si le module de gestion de réservation 13 identifie (OK) une ou plusieurs instances disponibles pour chaque classe de ressources C1, C2, C3, C4 répondant au besoin en ressources, lesdites valeurs d'instances disponibles pour une classe de ressources C1, C2, C3, C4 sont délivrées conjointement avec les valeurs d'instances VIₙ requises lors d'une étape 170 au travers d'une représentation graphique G1. Si aucune instance N1, Ni par classe de ressources C1, C2, C3, C4 n'est identifiée (NOK) comme étant disponibles pour répondre au besoin en ressources lors de l'étape de comparaison 150, lesdites valeurs d'instances VIₙ requises sont délivrées conjointement avec lesdites valeurs d'instances indisponibles pour une classe de ressources C1, C2, C3, C4 lors d'une étape 170 au travers d'une représentation graphique G1.

Dans le cas où aucune instance N1, Ni par classe de ressources C1, C2, C3, C4 n'est identifiée (NOK) comme étant disponibles pour répondre au besoin en ressources lors de l'étape de comparaison 150, le procédé 100 comprend une étape d'identification 160 d'instances alternatives VIₙ'.

Cette étape 160 consiste notamment à sélectionner 161 une ou plusieurs instances N1, Ni d'une classe de ressources C1, C2, C3, C4 alternative, c'est à dire différente de celle préalablement identifiée 130 et calculée 140 et d'une ou plusieurs durées au moins équivalentes à la durée de commande D préalablement identifiée et à comparer 162 la ou lesdites valeurs d'instances alternatives VIₙ' aux classes de ressources des instances disponibles dans le référentiel de réservation. L'étape d'identification 160 d'instances alternatives peut par exemple comporter des calculs matriciels sur la base des valeurs de commandes et des durées de commandes par rapport aux valeurs du référentiel de classes de ressources. Ainsi, il est possible de déterminer des combinaisons de classes de ressources permettant de répondre au besoin. De préférence, les définitions de matrices possibles sont comparées avec l'éventuelle période de commande de façon à supprimer les définitions entrainant une durée de commande alternative supérieure à la durée de la période de commande. Autrement dit, de façon à supprimer les définitions entrainant une période de disponibilité n'étant pas intégralement incluse dans la période de commande. Les définitions de matrices possibles sont alors comparées avec le référentiel de réservation et le module de gestion de réservation élimine les définitions non compatibles. Lors de cette étape, les valeurs d'instances alternatives sont comparées aux valeurs d'instances disponibles pour les classes de ressources concernées. Si un nombre suffisant d'instances sont disponibles, la définition est mémorisée. Sinon, une autre définition est présélectionnée de façon aléatoire parmi les définitions restantes et le module gestion de réservation réitère le processus.

Si aucune instance alternative n'est identifiée (NOK), une alerte 163 est émise à destination de l'opérateur pour l'informer de l'indisponibilité des ressources demandées.

Dans le cas où l'étape de comparaison 162 des valeurs d'instances alternatives VIₙ' permet (OK) d'identifier une ou plusieurs classes de ressources C1, C2, C3, C4 alternatives disponibles, pour une ou plusieurs durées au moins équivalentes à la durée de commande D préalablement identifiée, répondant au besoin en ressources préalablement identifié, lesdites valeurs d'instances VIₙ' alternatives sont délivrées conjointement avec les classes de ressources C1, C2, C3, C4 alternatives lors d'une étape 170 au travers d'une représentation graphique G1.

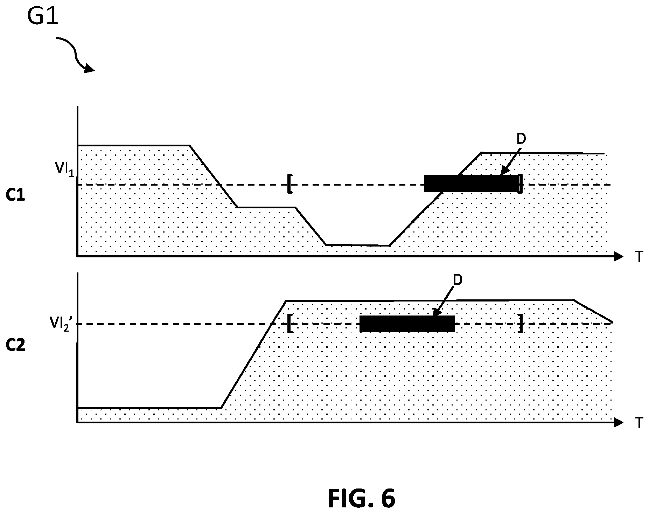

Un exemple de représentation graphique G1 produite à l'issue de l'étape 170 est décrit en lien avec la **figure 6****.** Dans l'exemple présenté, un message de requête a été traité et a abouti à l'identification d'une valeur d'instances VI₁ requises correspondant au nombre d'instances appartenant à la classe de ressource C1 nécessaires pour répondre au besoin en ressource. Néanmoins, comme cela est présenté à la figure 6 il n'y a pas assez d'instances disponibles pour répondre au besoin. La figure 6 illustre également une valeur d'instances VI₂, requises correspondant au nombre d'instances appartenant à la classe de ressource C2 nécessaires pour répondre au besoin en ressource. On peut ainsi constater que des instances sont disponibles pour répondre au besoin en ressources en lien avec les classes de ressources C2 pour une durée de commande D. En revanche, aucune instance ne semble disponible pour répondre au besoin en ressources en lien avec la classe de ressources C1 pour une durée de commande D. En effet la disponibilité en ressources pour chaque classe de ressources C1, C2 est indiquée par la surface couverte par des pointillés. Cela permet à un opérateur de voir directement quelles sont les classes de ressources C1, C2, indisponibles. Supposons que les classes de ressources C1, C2 représentent deux classes de ressources de type « calcul » dont les instances présentent des caractéristiques matérielles différentes. L'opérateur dispose ainsi d'une information complémentaire indiquant qu'une ou plusieurs instances de la classe de ressource C2 sont disponibles pour une durée de commande D requise. L'opérateur visualise directement que la classe de ressources C2 alternative pour une valeur d'instances alternatives VI₂' lui est proposé en lieu et place de la classe de ressource 1 indisponible pour répondre au besoin en ressources. La représentation montre rapidement à l'opérateur que les instances de classe C2 pourrait répondre au besoin en ressources du message de requête.

L'opérateur peut ainsi choisir quelles ressources allouées pour répondre au besoin en ressources suite à la visualisation des ressources disponibles. Le procédé comporte ainsi une étape de génération 180 d'un message de pré-réservation MPC comportant un identifiant pour chaque instance N1, Ni identifiée comme répondant au besoin en ressources et préalablement allouée par l'opérateur, ledit message de pré-réservation est ensuite émis à destination du dispositif 1 informatique. Dans un mode de réalisation particulier, l'opérateur peut, en fonction du besoin en ressources et notamment suite à l'affichage d'une représentation graphique G1, inscrire dans un champ dédié du message de pré-réservation MPC si la réservation est certaine, ce qui correspond à un indice de disponibilité « RES » inscrit dans un champ du référentiel de réservation, ou si la réservation est incertaine, ce qui correspond à un indice de disponibilité « PRERES » inscrit dans un champ du référentiel de réservation.

Suite à l'étape de génération 180 d'un message de pré-réservation MPC, le procédé 100 comprend une étape de modification 190 du référentiel de réservation suite à la réception 191 dudit message de pré-réservation MPC dispositif 1 informatique. L'étape 190 consiste alors à inscrire dans le champ correspondant du référentiel de réservation, un indice de disponibilité des instances N1, Ni identifiées dans le message de pré-réservation. Une telle modification est suivie d'une étape de comparaison 192 de l'indice de disponibilité des instances N1, Ni ainsi modifiées dans le référentiel de réservation. Si pour une durée de commande D, une ou plusieurs instances N1, Ni présentaient (NOK) dans le champ correspondant un indice de disponibilité traduisant une réservation ou une pré-réservation, c'est-à-dire que ces instances ont déjà été allouées par l'opérateur, alors l'étape de comparaison 192 est suivie d'une génération et d'une émission 193 d'un message d'alerte à destination de l'opérateur lui indiquant qu'une erreur d'allocation d'instances de ressources C1, C2, C3, C4 a été commise. En revanche, si l'étape de comparaison 192 indique que la ou les instances N1, Ni ne présentent pas (OK), dans le champ correspondant, un indice de disponibilité traduisant une réservation ou une pré-réservation, c'est-à-dire que ces instances n'ont pas été allouées par l'opérateur et sont donc bien disponibles, alors l'étape de comparaison 192 est suivie d'une génération et d'une émission 194 d'un message de confirmation indiquant que les instances N1, Ni ont été allouées.

## Revendications

1. Procédé (100) d'aide à la décision pour l'allocation de moyens de calcul sur une infrastructure (2) de calcul haute performance permettant une identification d'un ensemble d'instances (N1, Ni) répondant à un besoin en ressources, ledit procédé étant mis en œuvre par un dispositif (1) informatique comportant un module de communication (12), un module de traitement de données (13), un module de gestion de réservation (14) et un module de mémorisation (11) configuré pour stocker un référentiel de classe de ressources, un référentiel de réservations et un référentiel de mots-clés, ledit procédé comportant les étapes suivantes :
- Réception (120), par le module de communication (12), d'un message de requête (MR) comportant des données relatives à un besoin en ressources pendant une durée donnée ;
- Identification (130), par le module de traitement de données (13), dans le message de requête (MR) de :
• durée de commande (D),
• un ou de plusieurs mots clés référencés (KW₁,KWₙ) dans le référentiel de mots-clés, et
• une ou plusieurs valeurs de commande, chacune desdites valeurs de commande correspondant à une valeur numérique associée à un mot clé référencé identifié (KW₁,KWₙ) ;
- Calcul (140) à partir des valeurs de commande, par le module de traitement de données (13), d'une ou de plusieurs valeurs d'instances (VIₙ) requises, chacune correspondant à une valeur numérique associée à une classe (C1, C2, C3, C4) de ressources référencées dans le référentiel de classe de ressources, ladite valeur numérique correspondant à une quantité de moyens de calcul requis pour répondre au besoin en ressources ; et
- Comparaison (150) à partir du référentiel de réservation, par le module de gestion de réservation (14), des une ou plusieurs valeurs d'instances (VIₙ) requises calculées à des valeurs d'instances disponibles sur une durée au moins égale à la durée de commande (D), de façon à identifier un ensemble d'instances par classe de ressources (C1, C2, C3, C4) répondant au besoin en ressources et une période de disponibilité ; et
- Indication à un opérateur la disponibilité en ressource pour chaque classe de ressources répondant au besoin en ressources; et
- Génération d'un message de pré-réservation comportant un identifiant pour chaque instance identifiée comme répondant au besoin en ressources préalablement allouée par l'opérateur.

2. Procédé selon la revendication 1, **caractérisé en ce que** chaque instance (N1, Ni) est associée à un identifiant unique et **en ce que** le procédé comprend en outre une étape de génération (180) d'un message de pré-réservation (MPC) comportant les identifiants uniques des instances identifiées comme répondant au besoin en ressources.

3. Procédé selon l'une des revendications 1 ou 2, **caractérisé en ce qu'**il comprend une étape de génération (170) d'une représentation graphique (G1) des une ou plusieurs valeurs d'instances (VIₙ) requises chacune associée à une classe (C1, C2, C3, C4) de ressources en fonction du temps (T).

4. Procédé selon l'une quelconque des revendications précédentes, **caractérisé en ce que** le message de requête (MR) comporte des données relatives à une période de temps relative au besoin en ressources et **en ce que** l'étape d'identification comporte l'identification dans le message d'une période de temps de commande correspondant à la période de temps pendant laquelle le besoin en ressource est demandé.

5. Procédé selon l'une quelconque des revendications précédentes, **caractérisé en ce qu'**il comprend une étape de modification (190), par un module de gestion de réservation (14), du référentiel de réservation suite à la réception (191), par le module de communication (12), d'un message de confirmation (MC) de réservation de l'ensemble d'instances (N1, Ni) adaptées.

6. Procédé selon la revendication 5, **caractérisé en ce que** le message de confirmation (MC) de réservation comporte un indice de disponibilité associé à chacune des instances (N1, Ni), ledit indice de disponibilité prenant une valeur sélectionnée parmi au moins trois valeurs, de préférence parmi trois valeurs.

7. Procédé selon l'une quelconque des revendications précédentes, **caractérisé en ce que** le module de gestion de réservation (14) est configuré de façon à générer (193) une alerte (MA) lorsque le référentiel de réservation comporte deux valeurs d'indice de disponibilité pour une même instance (N1, Ni) sur une même période.

8. Procédé selon l'une quelconque des revendications précédentes, **caractérisé en ce qu'**il comprend en outre, lorsque l'étape de comparaison (150) ne permet pas d'identifier un ensemble d'instances (N1, Ni) répondant au besoin en ressources, une étape d'identification (160) d'instances alternatives (VIₙ'), ladite étape (160) comportant la sélection (161) d'une ou de plusieurs combinaisons de classes (C1, C2, C3, C4) de ressources alternatives et de durées de réservations permettant un service rendu équivalent au besoin en ressource puis une étape de comparaison (162) des classes de ressources (C1, C2, C3, C4) alternatives et de leur valeurs d'instances (VIₙ') alternatives requises aux classes (C1, C2, C3, C4) de ressources des instances (N1, Ni) disponibles du référentiel de réservation.

9. Dispositif (1) informatique d'aide à la décision pour l'allocation de moyens de calcul sur une infrastructure (2) de calcul haute performance, ledit dispositif informatique comportant un module de mémorisation (11) configuré pour stocker un référentiel de classe de ressources, un référentiel de réservations et un référentiel de mots-clés, un module de communication (12), un module de traitement de données (13), un module de gestion de réservation (14), un module d'interface homme-machine (15), et **caractérisé en ce que** :
- le module de communication (12) est configuré pour recevoir un message de requête (MR) comportant des données relatives à un besoin en ressources pendant une durée donnée ;
- le module de traitement de données (13) est configuré pour identifier dans le message de requête (MR) : une durée de commande (D), un ou plusieurs mots clés référencés (KW₁,KWₙ) dans le référentiel de mots-clés, et une ou plusieurs valeurs de commande, chacune desdites valeurs de commande correspondant à une valeur numérique associée à un mot clé référencé identifié (KW₁,KWₙ) ;
- le module de traitement de données (13) est en outre configuré pour calculer, à partir des valeurs de commande, une ou plusieurs valeurs d'instances (VIₙ) requises, chacune correspondant à une valeur numérique associée à une classe (C1, C2, C3, C4) de ressources référencée dans le référentiel de classe de ressources, ladite valeur numérique correspondant à une quantité de moyens de calcul requis pour répondre au besoin en ressources ; et
- le module de gestion de réservation (14) est configuré pour comparer à partir du référentiel de réservation, les une ou plusieurs valeurs d'instances (VIₙ) requises calculées à des valeurs d'instances disponibles sur une durée au moins égale à la durée de commande (D), de façon à identifier un ensemble d'instances par classe de ressources (C1, C2, C3, C4) répondant au besoin en ressources; et
- le module interface homme-machine est configuré pour indiquer la disponibilité en ressource pour chaque classe de ressources répondant au besoin en ressources; et
- le module interface homme-machine est en outre configuré pour générer un message de pré-réservation comportant un identifiant pour chaque instance identifiée comme répondant au besoin en ressources préalablement allouée par l'opérateur.

10. Système de calcul haute performance comportant une infrastructure (2) de calcul haute performance et un dispositif (1) informatique selon la revendication 9, d'aide à la décision pour l'allocation de moyens de calcul sur ladite infrastructure (2) de calcul haute performance.

11. Produit programme d'ordinateur comportant une ou plusieurs instructions interprétables ou exécutables par un module de traitement de données (13) d'un dispositif (1) informatique conforme à la revendication 9, **caractérisé en ce que** l'interprétation ou l'exécution desdites instructions par ledit module de traitement de données (13) provoque la mise en œuvre d'un procédé (100) selon l'une quelconque des revendications 1 à 8.

## Patentansprüche

1. Verfahren (100) für die Entscheidungsunterstützung bei der Zuweisung von Rechenmitteln auf einer Hochleistungsrecheninfrastruktur (2), die ein Identifizieren eines Satzes von Instanzen (N1, Ni) ermöglicht, die einem Ressourcenbedarf entsprechen, wobei das Verfahren durch eine Computervorrichtung (1) implementiert wird, die ein Kommunikationsmodul (12), ein Datenverarbeitungsmodul (13), ein Reservierungsverwaltungsmodul (14) und ein Speichermodul (11), das zum Speichern eines Repositorys für Ressourcenklassen, eines Repositorys für Reservierungen und eines Repositorys für Schlüsselwörter konfiguriert ist, umfasst, wobei das Verfahren die folgenden Schritte umfasst:
- Empfangen (120) einer Anfragenachricht (MR), die Daten zu einem Ressourcenbedarf während einer gegebenen Dauer umfasst, durch das Kommunikationsmodul (12);
- Identifizieren (130) durch das Datenverarbeitungsmodul (13) in der Anfragenachricht (MR) von:
• Auftragsdauer (D),
• einem oder mehreren referenzierten Schlüsselwörtern (KW₁,KWₙ) im Repository für Schlüsselwörter, und
• einem oder mehreren Auftragswerten, wobei jeder der Auftragswerte einem numerischen Wert entspricht, der einem identifizierten referenzierten Schlüsselwort (KW₁,KWₙ) zugeordnet ist;
- Berechnen (140) eines oder mehrerer Werte erforderlicher Instanzen (VIₙ), die jeweils einem numerischen Wert entsprechen, der einer Klasse (C1, C2, C3, C4) von Ressourcen zugeordnet ist, die im Repository für Ressourcenklassen referenziert sind, aus den Auftragswerten durch das Datenverarbeitungsmodul (13), wobei der numerische Wert einer Anzahl von Rechenmitteln entspricht, die erforderlich sind, um den Ressourcenbedarf zu erfüllen; und
- Vergleichen (150) der einen oder mehreren berechneten Werte erforderlicher Instanzen (VIₙ) mit Werten von Instanzen, die über eine Dauer verfügbar sind, die mindestens gleich der Auftragsdauer (D) ist, ausgehend von dem Repository für Reservierungen durch das Reservierungsverwaltungsmodul (14), um einen Satz von Instanzen nach Ressourcenklasse (C1, C2, C3, C4) zu identifizieren, der den Ressourcenbedarf und einen Verfügbarkeitszeitraum erfüllt; und
- Angeben der Ressourcenverfügbarkeit für jede Ressourcenklasse, die den Ressourcenbedarf erfüllt, für einen Bediener; und
- Generieren einer Vorabreservierungsnachricht, die eine Kennung für jede Instanz umfasst, die als den Bedarf an zuvor von dem Bediener zugewiesenen Ressourcen erfüllend identifiziert wurde.

2. Verfahren nach Anspruch 1, **dadurch gekennzeichnet, dass** jeder Instanz (N1, Ni) eine eindeutige Kennung zugeordnet ist und dass das Verfahren ferner einen Schritt des Generierens (180) einer Vorabreservierungsnachricht (MPC) umfasst, welche die eindeutigen Kennungen der als den Ressourcenbedarf erfüllend identifizierten Instanzen umfasst.

3. Verfahren nach einem der Ansprüche 1 oder 2,
**dadurch gekennzeichnet, dass** es einen Schritt des Generierens (170) einer graphischen Darstellung (G1) des einen oder der mehreren Werte erforderlicher Instanzen (VIₙ), die jeweils einer Ressourcenklasse (C1, C2, C3, C4) zugeordnet sind, in Abhängigkeit von der Zeit (T) umfasst.

4. Verfahren nach einem der vorstehenden Ansprüche,
**dadurch gekennzeichnet, dass** die Anfragenachricht (MR) Daten zu einem Zeitraum, für den der Ressourcenbedarf besteht, umfasst und dass der Schritt des Identifizierens das Identifizieren eines Auftragszeitraums in der Nachricht umfasst, der dem Zeitraum entspricht, während dem der Ressourcenbedarf angefordert wird.

5. Verfahren nach einem der vorstehenden Ansprüche,
**dadurch gekennzeichnet, dass** es einen Schritt des Modifizierens (190) des Repositorys für Reservierungen durch ein Reservierungsverwaltungsmodul (14) nach dem Empfangen (191) einer Bestätigungsnachricht (MC) für die Reservierung des Satzes angepasster Instanzen (N1, Ni) durch das Kommunikationsmodul (12) umfasst.

6. Verfahren nach Anspruch 5, **dadurch gekennzeichnet, dass** die Reservierungsbestätigungsnachricht (MC) einen Verfügbarkeitsindex umfasst, der jeder der Instanzen (N1, Ni) zugeordnet ist, wobei der Verfügbarkeitsindex einen Wert annimmt, der aus mindestens drei Werten, vorzugsweise aus drei Werten, ausgewählt ist.

7. Verfahren nach einem der vorstehenden Ansprüche,
**dadurch gekennzeichnet, dass** das Reservierungsverwaltungsmodul (14) konfiguriert ist, um eine Warnung (MA) zu generieren (193), wenn der Repository für Reservierungen zwei Verfügbarkeitsindexwerte für dieselbe Instanz (N1, Ni) über denselben Zeitraum umfasst.

8. Verfahren nach einem der vorstehenden Ansprüche,
**dadurch gekennzeichnet, dass** es ferner, wenn der Vergleichsschritt (150) es nicht ermöglicht, einen Satz von Instanzen (N1, Ni) zu identifizieren, die den Ressourcenbedarf erfüllen, einen Schritt (160) zum Identifizieren alternativer Instanzen (VIₙ') umfasst, wobei der Schritt (160) das Auswählen (161) einer oder mehrerer Kombinationen von Klassen (C1, C2, C3, C4) alternativer Ressourcen und von Reservierungsdauern, die eine dem Ressourcenbedarf gleichwertige Dienstleistung ermöglichen, umfasst und anschließend einen Schritt (162) des Vergleichens der alternativen Ressourcenklassen (C1, C2, C3, C4) und ihrer Werte alternativer erforderlicher Instanzen (VIₙ') mit den Ressourcenklassen (C1, C2, C3, C4) der verfügbaren Instanzen (N1, Ni) des Repositorys für Reservierungen umfasst.

9. Computervorrichtung (1) für die Entscheidungsunterstützung bei der Zuweisung von Rechenmitteln auf einer Hochleistungsrecheninfrastruktur (2), die Computervorrichtung umfassend ein Speichermodul (11), das konfiguriert ist, um darauf ein Repository für Ressourcenklassen, ein Repository für Reservierungen und ein Repository für Schlüsselwörter zu speichern, ein Kommunikationsmodul (12), ein Datenverarbeitungsmodul (13), ein Reservierungsverwaltungsmodul (14), ein Mensch-Maschine-Schnittstellenmodul (15), und
**dadurch gekennzeichnet, dass:**
- das Kommunikationsmodul (12) konfiguriert ist, um eine Anfragenachricht (MR) zu empfangen, die Daten zu einem Ressourcenbedarf während einer gegebenen Dauer umfasst;
- das Datenverarbeitungsmodul (13) konfiguriert ist, um in der Anfragenachricht (MR) Folgendes zu identifizieren: eine Auftragsdauer (D), ein oder mehrere referenzierte Schlüsselwörter (KW₁,KWₙ) in dem Repository für Schlüsselwörter und einen oder mehrere Auftragswerte, wobei jeder der Auftragswerte einem numerischen Wert entspricht, der einem identifizierten referenzierten Schlüsselwort (KW₁,KWₙ) zugeordnet ist;
- das Datenverarbeitungsmodul (13) ferner konfiguriert ist, um aus den Auftragswerten einen oder mehrere Werte erforderlicher Instanzen (VIₙ) zu berechnen, die jeweils einem numerischen Wert entsprechen, der einer Klasse (C1, C2, C3, C4) von Ressourcen zugeordnet ist, die in dem Repository für Ressourcenklassen referenziert ist, wobei der numerische Wert einer Anzahl von Rechenmitteln entspricht, die erforderlich sind, um den Ressourcenbedarf zu erfüllen; und
- das Reservierungsverwaltungsmodul (14) konfiguriert ist, um ausgehend von dem Repository für Reservierungen den einen oder die mehreren berechneten Wert erforderlicher Instanzen (VIₙ) mit Werten von Instanzen, die über eine Dauer verfügbar sind, die mindestens gleich der Auftragsdauer (D) ist, zu vergleichen, um eine Gruppe von Instanzen nach Ressourcenklasse (C1, C2, C3, C4) zu identifizieren, die den Ressourcenbedarf erfüllt; und
- das Mensch-Maschine-Schnittstellenmodul konfiguriert ist, um die Ressourcenverfügbarkeit für jede Ressourcenklasse, die den Ressourcenbedarf erfüllt, anzugeben; und
- das Mensch-Maschine-Schnittstellenmodul ferner konfiguriert ist, um eine Vorabreservierungsnachricht zu generieren, die eine Kennung für jede Instanz umfasst, die als den Bedarf an zuvor von dem Bediener zugewiesenen Ressourcen erfüllend identifiziert wurde.

10. Hochleistungsrechensystem, umfassend eine Hochleistungsrecheninfrastruktur (2) und eine Computervorrichtung (1) nach Anspruch 9 für die Entscheidungsunterstützung bei der Zuweisung von Rechenmitteln auf der Hochleistungsrecheninfrastruktur (2).

11. Computerprogrammprodukt, umfassend eine oder mehrere Anweisungen, die von einem Datenverarbeitungsmodul (13) einer Computervorrichtung (1) nach Anspruch 9 interpretierbar oder ausführbar sind, **dadurch gekennzeichnet, dass** das Interpretieren oder das Ausführen der Anweisungen durch das Datenverarbeitungsmodul (13) das Durchführen eines Verfahrens (100) nach einem der Ansprüche 1 bis 8 bewirkt.

## Claims

1. Method (100) for aiding decision-making for allocating computing means in a high-performance computing infrastructure (2), allowing a set of instances (N1, Ni) meeting a resource requirement to be identified, said method being implemented by a computer device (1) comprising a communication module (12), a data processing module (13), a reservation management module (14) and a storage module (11) configured to store a resource-class repository, a reservation repository and a keyword repository, said method comprising the following steps:
- Receiving (120), by means of the communication module (12), a request message (MR) containing data relating to a resource requirement for a given duration;
- Identifying (130), by means of the data processing module (13), in the request message (MR):
• an order duration (D),
• one or more keywords (KW₁,KWₙ) referenced in the keyword repository, and
• one or more order values, each of said order values corresponding to a numerical value associated with an identified referenced keyword (KW₁,KWₙ);
- Computing (140), from the order values, by means of the data processing module (13), one or more required instance values (VIₙ), each corresponding to a numerical value associated with a class (C1, C2, C3, C4) of resources referenced in the resource-class repository, said numerical value corresponding to a quantity of computing means required to meet the resource requirement; and
- Comparing (150), from the reservation repository, by means of the reservation management module (14), one or more computed required instance values (VIₙ) with instance values available over a duration that is at least equal to the order duration (D), so as to identify a set of instances per resource class (C1, C2, C3, C4) that meets the resource requirement, and an availability period; and
- Indicating to an operator the resource availability for each resource class that meets the resource requirement; and
- Generating a pre-reservation message containing an identifier for each instance identified as meeting the resource requirement previously allocated by the operator.

2. Method according to claim 1, **characterized in that** each instance (N1, Ni) is associated with a unique identifier and **in that** the method further comprises a step of generating (180) a pre-reservation message (MPC) containing the unique identifiers of the instances identified as meeting the resource requirement.

3. Method according to one of claims 1 or 2, **characterized in that** it comprises a step of generating (170) a graphical representation (G1) of one or more required instance values (VIₙ), each associated with a class (C1, C2, C3, C4) of resources as a function of time (T).

4. Method according to any one of the preceding claims,
**characterized in that** the request message (MR) contains data relating to a period of time relative to the resource requirement, and **in that** the identification step comprises identifying in the message an order time period corresponding to the period of time during which the resource requirement is requested.

5. Method according to any one of the preceding claims,
**characterized in that** it comprises a step of modifying (190), by means of a reservation management module (14), the reservation repository following the reception (191), by means of the communication module (12), of a reservation confirmation message (MC) for the set of suitable instances (N1, Ni).

6. Method according to claim 5, **characterized in that** the reservation confirmation message (MC) contains an availability index associated with each of the instances (N1, Ni), said availability index taking a value selected from at least three values, preferably from three values.

7. Method according to any one of the preceding claims,
**characterized in that** the reservation management module (14) is configured to generate (193) an alert (MA) when the reservation repository contains two availability index values for the same instance (N1, Ni) over the same period.

8. Method according to any one of the preceding claims,
**characterized in that** it further comprises, when the comparison step (150) does not make it possible to identify a set of instances (N1, Ni) that meets the resource requirement, a step of identifying (160) alternative instances (VIₙ'), said step (160) comprising selecting (161) one or more combinations of classes (C1, C2, C3, C4) of alternative resources and reservation durations that allow a service to be provided that is equivalent to the resource requirement, followed by a step of comparing (162) alternative resource classes (C1, C2, C3, C4) and their required alternative instance values (VIₙ') with the resource classes (C1, C2, C3, C4) of the available instances (N1, Ni) of the reservation repository.

9. Computer device (1) for aiding decision-making for allocating computing means in a high-performance computing infrastructure (2), said computer device comprising a storage module (11) configured to store a resource-class repository, a reservation repository and a keyword repository, a communication module (12), a data processing module (13), a reservation management module (14) and a human-machine interface module (15), and **characterized in that:**
- the communication module (12) is configured to receive a request message (MR) containing data relating to a resource requirement for a given duration;
- the data processing module (13) is configured to identify in the request message (MR): an order duration (D), one or more keywords (KW₁,KWₙ) referenced in the keyword repository, and one or more order values, each of said order values corresponding to a numerical value associated with an identified referenced keyword (KW₁,KWₙ);
- the data processing module (13) is further configured to compute, from the order values, one or more required instance values (VIₙ), each corresponding to a numerical value associated with a resource class (C1, C2, C3, C4) referenced in the resource-class repository, said numerical value corresponding to a quantity of computing means required to meet the resource requirement; and
- the reservation management module (14) is configured to compare, from the reservation repository, the one or more calculated required instance values (VIₙ) with instance values available over a duration that is at least equal to the order duration (D), so as to identify a set of instances per resource class (C1, C2, C3, C4) that meets the resource requirement; and
- the human-machine interface module is configured to indicate the resource availability for each resource class that meets the resource requirement; and
- the human-machine interface module is also configured to generate a pre-reservation message containing an identifier for each instance identified as meeting the resource requirement previously allocated by the operator.

10. High-performance computing system comprising a high-performance computing infrastructure (2) and a computer device (1) according to claim 9, for aiding decision-making for allocating computing resources in said high-performance computing infrastructure (2).

11. Computer program product comprising one or more instructions which can be interpreted or executed by a data processing module (13) of a computer device (1) according to claim 9, **characterized in that** the interpretation or execution of said instructions by said data processing module (13) causes the implementation of a method (100) according to any one of claims 1 to 8.
